# EUROPEAN PATENT APPLICATION

(11) **EP 0 982 684 A1**
(43) Date of publication of application: **01.03.2000**
(21) Application number: 98907183.2
(22) Date of filing: 11.03.1998
(51) Int. Cl.: G06T 13/00, G10L 5/02

(54) **MOVING PICTURE GENERATING DEVICE AND IMAGE CONTROL NETWORK LEARNING DEVICE**

(71) Applicant: MITSUBISHI DENKI KABUSHIKI KAISHA, Tokyo 100-8310 (JP)
(72) Inventor: EBIHARA, T., Mitsubishi Denki Kabushiki Kaisha, Tokyo 100-8310 (JP); ISHIKAWA, Y., Mitsubishi Denki Kabushiki Kaisha, Tokyo 100-8310 (JP)
(74) Representative: Pfenning, Meinig & Partner
(86) International application number: JP9801025
(87) International publication number: WO9946732

(57) **Abstract**

There provides a language analyzing means 2 for analyzing an input text 1 to obtain language information 3 including pronunciation of words or segments, word classes, and accent types; an acoustic processing means 5 for determining an acoustic parameter 6 on the basis of the language information 3; a prosodic generation means 7 for determining a prosodic parameter 8 for pitch, duration length, a pause and the like on the basis of the language information 3; a speech synthesis means 9 for generating synthetic speech based on the acoustic parameter 6 and the prosodic parameter 8; an image storage means 10 for storing an facial or body image corresponding to the prosodic parameter; an image control means 12 for determining a moving image 13 to be outputted, with reference to the image storage means 10, on the basis of the prosodic parameter 8; and an image display means 14 for displaying the output image.

## Description

### Technical Field

The present invention relates to a moving image generation apparatus and an image control network learning apparatus in which an image and speech are simultaneously outputted and presented in a synthesis-by-rule system, a speech interactive system, or the like.

### Background Art

A synthesis-by-rule technique is a technique in which a text composed of arbitrary character strings is transformed into speech to be presented, and is used for applications such as information service by speech, a reading unit for disabled persons, and revision for the newspaper articles.

The synthesis-by-rule technique is also employed in a technique realizing a man-machine interface by speech, and a technique has been recently developed in which, from arbitrary text information, a moving image of a lip motion during speech thereof and the human body including this is generated, as is the case of speech synthesis. With use of this along with a speech synthesis technique, a more natural man-machine interface would be feasible.

Such prior art moving image generation apparatuses in which an image is synthesized and outputted at the same time of speech on the basis of the text information include an image synthesis apparatus for generating facial motion images having a mouth shape change in accordance with character strings, as a technique disclosed in, for example, Japanese Patent Application Laid-Open No. Hei 2-234285 entitled "IMAGE SYNTHESIS METHOD AND APPARATUS THEREFOR" (Hereinafter, referred to as Reference 1).

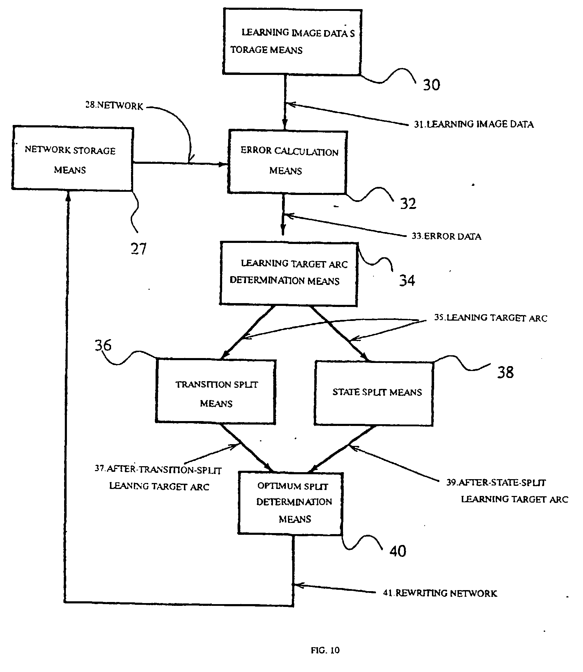

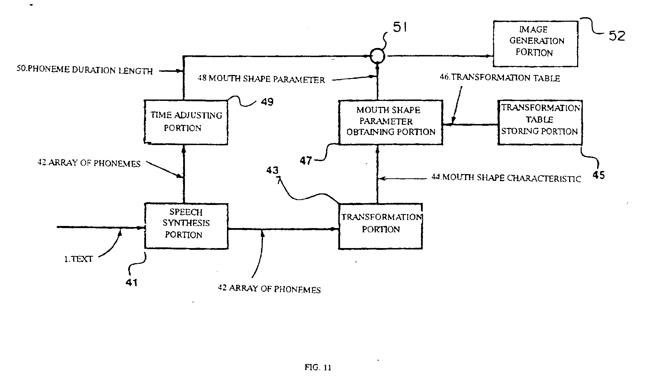

Fig. 11 is a block diagram of a conventional moving image generation apparatus in accordance with a technique shown in Reference 1.

In Fig. 11, reference numeral 1 denotes a text (character string); 41, a speech synthesis portion for segmenting the text 1 into a string of phoneme 42 to be outputted; 43, a transformation portion for transforming a phonemic characteristic for each phoneme 42 from the speech synthesis portion 41 into a mouth shape characteristic 44; and 45, a transformation table storage portion for storing a transformation table 46 which describes a specific relation between a variety of mouth shape characteristics and a mouth shape parameter.

Further, reference numeral 47 denotes a mouth shape parameter obtaining portion for obtaining a mouth shape parameter 48 corresponding to the mouth shape characteristics 44 with reference to the transformation table 46; 49, a time adjusting portion for outputting a phoneme duration length 50 corresponding to each phoneme in the string of phoneme 42; 51, a gate for outputting the mouth shape parameter 48 for a period of the phoneme duration length 50; and 52, an image generation portion for generating an image on the basis of the mouth shape parameter entered via the gate 51.

A description will now be given of a conventional moving image generation apparatus illustrated in Fig. 11 as described above.

The text 1 is segmented into an array of phonemes 42 by the speech synthesis portion 41, and is transformed from the phonemic characteristics for each phoneme to the mouth shape characteristic 44 by the transformation portion 43. The mouth shape parameter 48 is extracted by the mouth shape parameter obtaining portion 47, with reference to, from the transformation table storing portion 45, the transformation table 46 which describes an association of a variety of mouth shape characteristics and the specific mouth shape parameter. Then, an output of the mouth shape parameter is controlled in accordance with the duration 50 for each phoneme by the time adjusting portion 49, to generate an image in the image generation portion 52 so that a moving image provided as an image sequence having fixed time intervals is generated.

A technique other than the foregoing moving image generation apparatus in which a moving image generation is feasible in synchronism with speech includes a "VIDEO CONTROL SYSTEM BY SPEECH" described in Japanese Patent Application Laid-Open No. Hei 4-155381 (hereinafter, referred to as Reference 2).

In Reference 2, a speech input portion for inputting sound or voice is provided with a filter that detects strength, or height of the sound or voice, and there is proposed a method of generating a video signal including controlling a video signal generation processing in a video processing portion in accordance with presence or absence, strength, or height of the sound or voice, and, if necessary, synthesizing or processing the image data pre-stored therein by the video processing portion in accordance with its control.

The video can be controlled and changed, for example, in synchronism with noise, voice, music, or the like, enabling characters appeared on a TV monitor to behave as if it had an audible ability, and it aims at a feasibility of the video control in synchronism with voice over a telephone conversation via a telephone.

However, although the prior art shown in Reference 1 can attain a moving image generation in timewise synchronism with speech by carrying out an image control depending upon the kinds of speech characteristics, only a lip image may be controlled. There is no ability to provide a varying images in accordance with a prosodic difference or linguistic context nor ability to realize an image generation for an facial expression in the sites other than lip, gesture, and the like.

Furthermore, the prior art shown in Reference 2 is a technique in which a moving image is controlled using prosodic information for pitch, power, and the like by speech, which limits a target to active speech such as telephone conversation. That is, speech synthesis based on a synthesis-by-rule technique including a text reading or speech interactive processing is not taken into consideration.

An object of the present invention is to overcome these problems, and to obtain a moving image generation apparatus capable of providing a more natural moving image as if the human made a speech, by actively making use of not only acoustic information obtained from an input text but also prosodic information or linguistic context information in the input text.

It is another object of the present invention to obtain a moving image control network learning apparatus in which a network learning can be carried out in a convenient learning method that makes it possible to realize a moving image generation apparatus where a more natural moving image is provided by modeling a correlation between language information in a text or prosodic information and a facial expression or motion of the human that generates it, to actively make use of context feature in the text.

### DISCLOSURE OF THE INVENTION

An moving image generation apparatus in accordance with the present invention comprises: a language analyzing means for analyzing an input text to obtain language information including pronunciation of words or segments, word classes, and accent types; an acoustic processing means for determining an acoustic parameter on the basis of the above language information; a prosodic generation means for determining a prosodic parameter for pitch, duration length, a pause and the like on the basis of the above language information; a speech synthesis means for generating synthetic speech based on the above acoustic parameter and the above prosodic parameter; an image storage means for storing an facial or body image corresponding to the prosodic parameter; an image control means for determining an output image, with reference to the above image storage means, using the prosodic parameter outputted from the above prosodic generation means; and an image display means for displaying the above output image.

It is also characterized in that the above image storage means stores a facial or body image corresponding to phonemic and prosodic parameters, and that the above image control means determines an output image, with reference to the above image storage means, using the prosodic parameter outputted from the above prosodic generation means and the phoneme of the language information outputted from the above language analyzing means.

It further comprises a context storage means for storing a context of the language information in a text on the basis of the above language information outputted from the above language analyzing means, and is characterized in that the above image storage means stores a facial or body image corresponding to the context, and the above image control means determines an output image, with reference to the above image storage means, using the context outputted from the above context storage means.

It further comprises a context storage means for storing a context of the language information in a text on the basis of the above language information outputted from the above language analyzing means, and is characterized in that the above prosodic generation means determines a prosodic parameter for pitch, duration length, a pause and the like on the basis of the language information from the above context storage means.

It further comprises: a network storage means for storing as a network a set of a state relating to a facial expression or motion of the human, a prosodic parameter serving as a control category, a transition destination state for a state transition in response to an acceptance of the control category, and a parameter indicating a manner of a facial expression or motion of the human serving as a value given in each state transition; and a network reference means for reading out a network relative to the prosodic parameter inputted from the above prosodic generation means, with reference to the above network storage means, to transition the state of network when the network accepts the above prosodic parameter as a control category, and to output the image control parameter at the time of transition, and is characterized in that the above image storage means stores a facial or body image corresponding to the image control parameter, and the above image control means determines an output image, with reference to the above image storage means, using the image control parameter from the above network reference means.

Further, a moving image generation apparatus in accordance with another invention comprises: a language analyzing means for analyzing an input text to obtain language information including pronunciation of words or segments, word classes, and accent types; an acoustic processing means for determining an acoustic parameter on the basis of the above language information; a prosodic generation means for determining a prosodic parameter for pitch, duration length, a pause and the like on the basis of the above language information; a speech synthesis means for generating synthetic speech based on the above acoustic parameter and the above prosodic parameter; a learning image generation means for learning and storing in advance a correlation of the above language information and a facial or body image, and for outputting an image with reference to the correlation on the basis of the language information obtained from the above language analyzing means; and an image display means for displaying the output image.

The above learning image generation means is further characterized by comprising an image table storage means for storing as a table a correlation of the language information and a facial or body image, and an image table reference means for outputting an image corresponding to the above language information, with reference to the above image table storage means.

The learning image generation means is further characterized by comprising: a parameter table storage means for tabling and storing a correlation of the language information and an image control parameter indicating a manner of image indicative of a facial expression or motion of the human; a parameter table reference means for outputting an image control parameter corresponding to the above language information, with reference to the above parameter table storage means; an image storage means for storing a facial or body image corresponding to the image control parameter; and an image control means for determining an output image, with reference to the above image storage means, using the image control parameter outputted from the above parameter table reference means.

It further comprises a motion synchronizing probability storage means for storing a table which describes a motion synchronizing probability where a plurality of motions occur in correspondence with a piece of the above language information, and is characterized in that the above parameter table reference means outputs a plurality of image control parameters, with reference to the above parameter table storage means and the above motion synchronizing probability storage means, on the basis of the language information outputted from the above language analyzing means.

The above learning image generation means is further characterized by comprising: a network storage means for storing as a network a set of a state relating to a facial expression or motion of the human, language information serving as a control category, a transition destination state for a state transition in response to an acceptance of the control category, and a parameter indicating a manner of a facial expression or motion of the human serving as a value given in each state transition; a network reference means for reading out a network relative to the above language information, with reference to the above network storage means, to transition the state of network when the network accepts the above language information as a control category, and to output the image control parameter at the time of transition; an image storage means for storing a facial or body image corresponding to the image control parameter; and an image control means for determining an output image, with reference to the above image storage means, using the image control parameter from the above network reference means.

An image control network learning apparatus in accordance with the present invention comprises: a learning image data storage means for storing a control parameter as learning image data, language information in a text or a prosodic parameter serving as the above control category in correspondence with an image parameter for a face or body of the human who is speaking the text; a network storage means for storing as a network a set of a state relating to a facial expression or motion of the human, language information or a prosodic parameter serving as a control category, a transition destination state for a state transition in response to an acceptance of the control category, and an image parameter indicating a manner of a facial expression or motion of the human serving as a value given in each state transition; an error calculation means, to which the above learning image data read out from the above learning image data storage means is inputted, for reading out from the above network storage means the state transition from the state of the network, based on the control category of the learning image data, which is currently being maintained, the state being replaced with the transition destination state and then maintained, and for calculating an error between the image parameter contained in the state transition and the image parameter of the learning image data to be then outputted; a learning target arc determination means for determining a state transition of a learning target on the basis of the above error for each state transition, which is rendered as a learning target arc; a transition split means for splitting a set of control category acceptable for the above learning target arc, to replace the state transition correspondingly, and for calculating an error of the image parameter among the learning target arcs after the split; a state split means for splitting a transition original state or a transition destination state of the above learning target arc, to replace the state transition correspondingly, and for calculating an error of the image parameter among the learning target arcs after the split; and an optimum split determination means for determining the error outputted from the above transition split means and the error outputted from the above state split means to select the state transition replaced by any one of these split means to rewrite the state transition within the network stored in the above network storage means.

### Brief Description of the Drawings

Fig. 1 is a block diagram showing a moving image generation apparatus in accordance with Embodiment Mode 1 of the present invention;
Fig. 2 is a block diagram showing a moving image generation apparatus in accordance with Embodiment Mode 2 of the present invention;
Fig. 3 is a block diagram showing a moving image generation apparatus in accordance with Embodiment Mode 3 of the present invention;
Fig. 4 is a block diagram showing a moving image generation apparatus in accordance with Embodiment Mode 4 of the present invention;
Fig. 5 is a block diagram showing a moving image generation apparatus in accordance with Embodiment Mode 5 of the present invention;
Fig. 6 is a block diagram showing a moving image generation apparatus in accordance with Embodiment Mode 6 of the present invention;
Fig. 7 is a block diagram showing a moving image generation apparatus in accordance with Embodiment Mode 7 of the present invention;
Fig. 8 is a block diagram showing a moving image generation apparatus in accordance with Embodiment Mode 8 of the present invention;
Fig. 9 is a block diagram showing a moving image generation apparatus in accordance with Embodiment Mode 9 of the present invention;
Fig. 10 is a block diagram showing an image control network learning apparatus in accordance with Embodiment Mode 10 of the present invention;
Fig. 11 is a block diagram showing a conventional moving image generation apparatus;
Fig. 12 is an explanatory diagram showing an example of a network in the moving image generation apparatus in accordance with Embodiment Modes 8 and 9 of the present invention;
Fig. 13 is an explanatory diagram showing an example of network including an after-transition-split learning target arc outputted from a transition split means in the moving image generation apparatus in accordance with Embodiment Mode 10 of the present invention;
Fig. 14 is an explanatory diagram showing an example of an operation of a state split means in the moving image generation apparatus in accordance with Embodiment Mode 10 of the present invention; and
Fig. 15 is an explanatory diagram showing an example of network including an after-state-split learning target arc outputted from the state split means in the moving image generation apparatus in accordance with Embodiment Mode 10 of the present invention.

### BEST MODE FOR CARRYING OUT THE INVENTION

### Embodiment Mode 1.

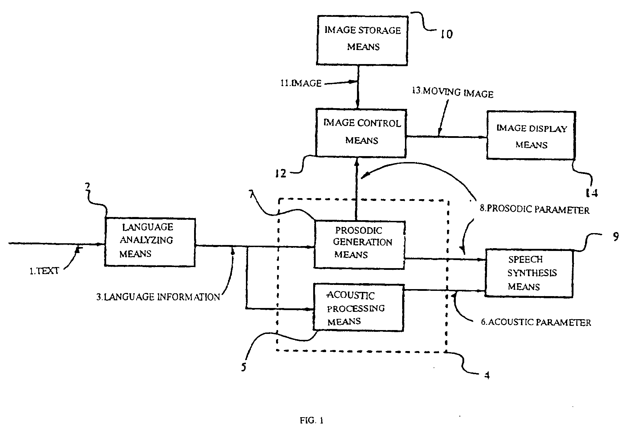

Fig. 1 is a block diagram showing a moving image generation apparatus in accordance with Embodiment Mode 1.

In Fig. 1, reference numeral 1 denotes a text; 2, a language analyzing means for analyzing the text 1 that has been inputted to obtain language information 3 including pronunciation of words or segments, word classes, and accent types; 4, a synthetic parameter generation means; 5, an acoustic processing means for determining an acoustic parameter 6, with reference to an acoustic dictionary, on the basis of the language information 3; and 7, a prosodic generation means for applying various rules on the basis of the language information 3 to determine a prosodic parameter 8 for pitch, duration length, a pause and the like.

Further, reference numeral 9 denotes a speech synthesis means for generating synthetic speech based on the acoustic parameter 6 and the prosodic parameter 8; 10, an image storage means for storing a facial or body image corresponding to the prosodic parameter 8; 12, an image control means for retrieving an image 11 with the prosodic parameter 8 with reference to the image storage means 10 to determine a moving image 13 to be outputted; and 14, an image display means for displaying the output image.

An operation will now be described.

The input text 1 is composed of sentences of mixed Japanese Kanji and Kana characters, and is inputted to the language analyzing means 2. Any input format to the text 1 may be available including a key input from a keyboard, and a recognition result to be outputted by a speech recognition apparatus.

The language analyzing means 2 determines segments contained in the text with reference to a dictionary storing pronunciation of words, word classes, accent types, and the like, and performs a morphological analysis processing in which pronunciation of each segment, word classes, accent types, and the like are extracted to output the language information 3.

The language information 3 outputted from the language analyzing means 2 is composed of information including pronunciation of words or segments, word classes, and accent types, which is necessary for a synthesis by rule.

The synthetic parameter generation means 4 is comprised of the acoustic processing means 5 and the prosodic generation means 7.

Here, the acoustic processing means 5 extracts the acoustic parameter 6 corresponding to pronunciation of words or segments, with reference to an acoustic dictionary, on the basis of the above language information 3. The acoustic parameter 6 is in the mode of a speech waveform or in the mode of a characteristic quantity such as LPC coefficient, melcepstrum, and LSP coefficient, which is extracted in advance from speech, and is prepared in the form of phonetic segment constituted by units such as CV (a set of consonant-vowel) and VCV (a set of vowel-consonant-vowel), which is stored in the acoustic dictionary.

Then, the prosodic generation means 7 employs the prosodic control rule such as a pitch pattern generation rule, duration length generation rule, and a pause insertion rule on the basis of the above language information 3 to determine and output the prosodic parameter 8 for the pitch pattern, the duration length, the pause insertion position, and the like.

The speech synthesis means 9 generates synthetic speech with the acoustic parameter 6 and the prosodic parameter 8 to be then outputted by means of a speaker and the like.

The image storage means 10 stores the image 11 representing a facial expression and motion of the human so as to correspond to the prosodic parameter 8. For example, an image for high pitch where the mouth is widely open and the eyes are also widely open, an image for low pitch where the mouth and eyes are likely to be closed, an image for a pause where the mouth is closed, and the like are stored therein.

The image control means 12 reads out the image 11 complying with the prosodic parameter 8 with reference to the above image storage means 10 on the basis of the prosodic parameter 8 outputted from the above prosodic generation means 7. The moving image 13 is then outputted by presenting the image 11 in synchronism with an input time of the prosodic parameter 8.

The image display means 14 displays the above moving image 13 on a monitor or the like.

As described above, this moving image generation system is designed to perform an image control based on the prosodic parameter obtained from the text to thereby generate a moving image in accordance with high or low pitch of the synthetic speech and the like.

With such an arrangement, the prosodic parameter 8 obtained from the text 1 can be utilized to carry out the moving image generation, the moving image can be generated in synchronism with a prosodic feature of the synthetic speech, and more natural information provision can be consequently realized.

### Embodiment Mode 2.

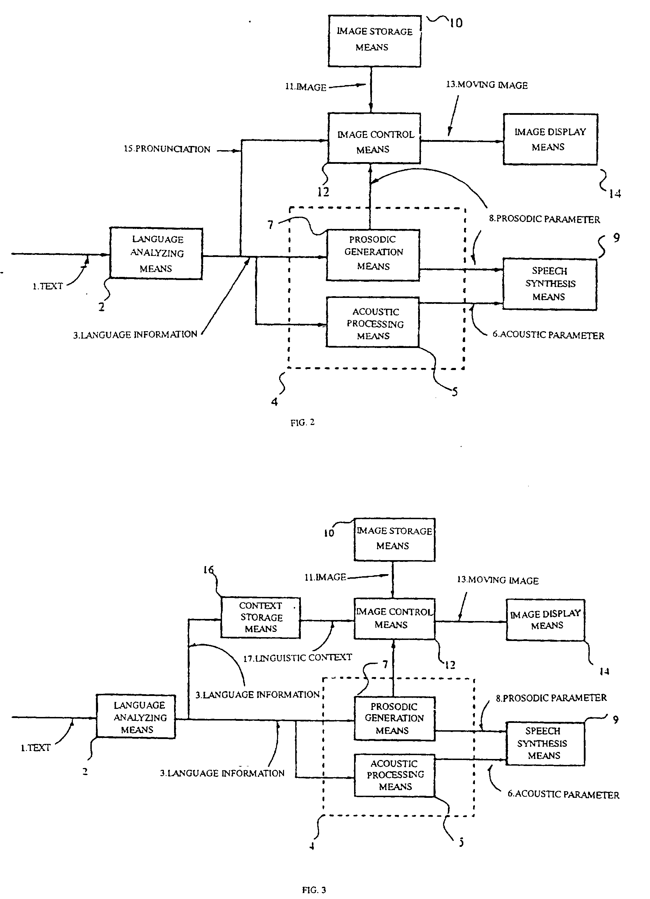

Now, Fig. 2 is a block diagram showing a moving image generation apparatus in accordance with Embodiment Mode 2.

In Fig. 2, the identical parts with that of Embodiment Mode 1 shown in Fig. 1 are shown designated by the same reference numerals, and an explanation thereof will be omitted. A new reference numeral 15 indicates pronunciation (phonetic symbol) of words or segments in the language information 3 outputted from the language analyzing means 2.

Further, in this Embodiment Mode 2, the image storage means 10 stores a facial or body image corresponding to the phonetic symbol and the prosodic parameter, and the image control means 12 is designed to determine an output image, with reference to the image storage means 10, using the prosodic parameter 8 outputted from the prosodic generation means 7 and the pronunciation 15 in the language information 3 outputted from the language analyzing means 2.

An operation will now be described.

The input text 1 composed of sentences of mixed Japanese Kanji and Kana characters is inputted to the language analyzing means 2. It is assumed that the text is the same as that in Embodiment Mode 1. The language analyzing means 2 determines segments contained in the text with reference to a dictionary to performs a morphological analysis processing in which pronunciation of each segment, word classes, accent types, and the like are extracted.

The language information 3 is outputted from the language analyzing means 2, and is composed of information including pronunciation of words or segments, word classes, and accent types, which is required for the synthesis by rule. The synthetic parameter generation means 4 is comprised of the acoustic processing means 5 and the prosodic generation means 7.

The acoustic processing means 5 extracts the acoustic parameter 6 corresponding to pronunciation of words or segments, with reference to an acoustic dictionary, on the basis of the above language information 3. The acoustic parameter 6 is assumed to be the same as that in Embodiment Mode 1. The prosodic generation means 7 employs the prosodic control rule on the basis of the above language information 3 to determine and output the prosodic parameter 8.

The speech synthesis means 9 generates synthetic speech with the acoustic parameter 6 and the prosodic parameter 8 to be then outputted by means of a speaker and the like.

The image storage means 10 stores the image 11 representing a facial expression and motion of the human so as to correspond to all the phonetic symbols and the prosodic parameter 8. For example, with respect to one phonetic symbol "a", an image for high pitch where the mouth is widely open and the eyes are also widely open, an image for low pitch where the mouth and the eyes are likely to be closed, an image for a pause where the mouth is closed, and the like are stored therein.

The image control means 12 reads out the image 11 complying with prosodic parameter 8 with reference to the above image storage means 10 on the basis of the prosodic parameter 8 outputted from the above prosodic generation means 7 and the pronunciation 15 in the text obtained from the above language analyzing means 2. The moving image 13 is then outputted by presenting the image 11 in synchronism with an input time of the prosodic parameter 8.

The image display means 14 displays the above moving image 13 on a monitor or the like.

As described above, this moving image generation apparatus is designed to perform an image control based on the pronunciation 15 in the text and the prosodic parameter 8 obtained from the text, to thereby generate a moving image in correspondence with high or low pitch of the synthetic speech and the like.

That is, according to this apparatus, the image storage means 10 stores a facial or body image corresponding to the kind of phoneme and the prosodic parameter. The image control means 12 retrieves an image using the prosodic parameter 8 and the pronunciation 15 in the text with reference to the image storage means 10, and then determines a moving image to be outputted.

With such an arrangement, the pronunciation 15 of the text and the prosodic parameter 8 obtained from the text can be utilized to carry out the moving image generation, the moving image can be generated in synchronism with a phonemic characteristic and a prosodic feature of the synthetic speech, and more natural information provision can be consequently realized.

### Embodiment Mode 3.

Now, Fig. 3 is a block diagram showing a moving image generation apparatus in accordance with Embodiment Mode 3.

In Fig. 3, the identical parts with that of Embodiment Mode 1 shown in Fig. 1 are shown designated by the same reference numerals, and an explanation thereof will be omitted. A new reference numeral 16 indicates a context storage means for storing a context of language information in a text on the basis of the language information 3 outputted from the language analyzing means 2; and 17, a linguistic context.

Further, in this Embodiment Mode 3, the image storage means 10 stores the image 11 representing a facial expression or motion of the human so as to correspond to the linguistic context 17, and the image control means 12 is designed to retrieve an image using the linguistic context 17 outputted from the context storage means 16 with reference to the image storage means 10, and then determine an output image.

An operation will now be described.

The input text 1 composed of sentences of mixed Japanese Kanji and Kana characters is inputted to the language analyzing means 2. It is assumed that the text is the same as that in Embodiment Mode 1. The language analyzing means 2 determines segments contained in the text with reference to a dictionary, and performs a morphological analysis processing in which pronunciation of each segment, word classes, accent types, and the like are extracted. The language information 3 is outputted from the language analyzing means 2, and is composed of information including pronunciation of words or segments, word classes, and accent types, which is required for the synthesis by rule.

The synthetic parameter generation means 4 is comprised of the acoustic processing means 5 and the prosodic generation means 7. The acoustic processing means 5 extracts the acoustic parameter 6 corresponding to pronunciation of words or segments, with reference to an acoustic dictionary, on the basis of the above language information 3. The acoustic parameter 6 is assumed to be the same as that in Embodiment Mode 1. The prosodic generation means 7 employs the prosodic control rule on the basis of the above language information 3 to determine and output the prosodic parameter 8. The speech synthesis means 9 generates synthetic speech with the acoustic parameter 6 and the prosodic parameter 8 to be then outputted by means of a speaker and the like.

The context storage means 16 stores as the linguistic context 17 the sequence of language information 3 obtained by the language analyzing means 2 from a sentence unit of the text 1. The linguistic context 17 is assumed to store a set of pronunciation of each segment, word classes, and accent types in time-sequential order.

The image 11 representing a facial expression or motion of the human is stored in the image storage means 10 so as to correspond to the linguistic context 17. For example, one image is provided correspondingly for the language information in the preceding segment and the current segment in a single segment. Specifically, an image slightly oriented upward in the case where the word class changes from noun to noun, an image slightly inclined downward in the case where the it changes from noun to verb, an image oriented downward for a word located at the end-of-sentence, and the like are provided.

The image control means 12 reads out the image 11 along the transition prosodeme in the language information, with reference to the above image storage means 10, on the basis of the linguistic context 17 outputted from the above context storage means 16. The moving image 13 is then outputted by presenting the image 11 in synchronism with an input time of the prosodic parameter 8. The image display means 14 displays the above moving image 13 on a monitor or the like.

As described above, this moving image generation apparatus is designed to perform an image control based on the context in the language information 3 obtained from the text, to thereby generate a moving image from a context of the linguistic feature among segments.

That is, according to this apparatus, the context storage means 16 stores language information in a text for one sentence. The image storage means 10 stores a facial or body image corresponding to the linguistic context 17. Further, the image control means 12 retrieves an image, with reference to the image storage means 10, using the linguistic context 17, and then determines a moving image 13 to be outputted.

With such an arrangement, since the moving image is generated from a context of the linguistic characteristic among the segments in the text, more natural information provision, which reflects context features of the text, can be realized.

### Embodiment Mode 4.

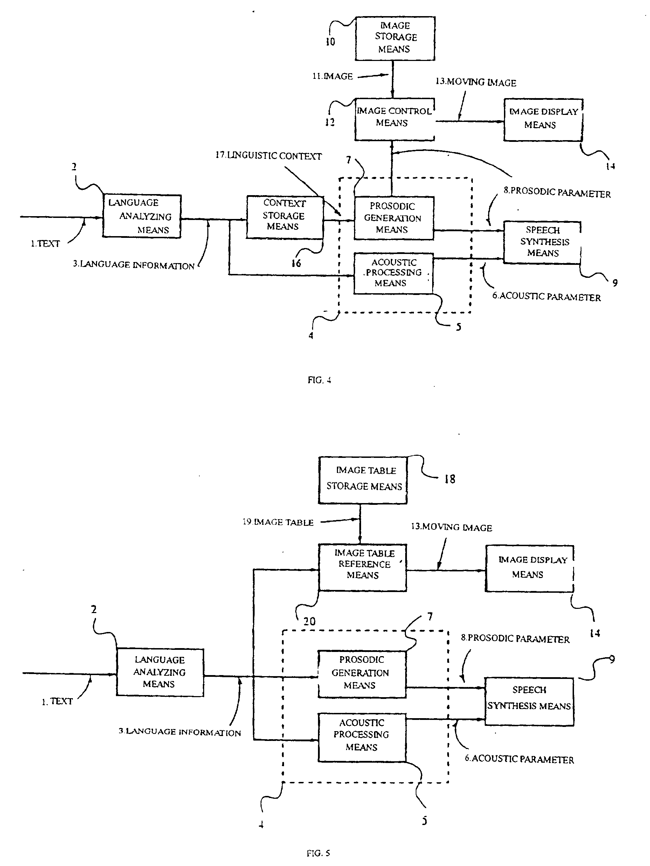

Now, Fig. 4 is a block diagram showing a moving image generation apparatus in accordance with Embodiment Mode 4.

In Fig. 4, the identical parts with that of Embodiment Mode 3 shown in Fig. 3 are shown designated by the same reference numerals, and an explanation thereof will be omitted. In this Embodiment Mode 4, the context storage means 16 is arranged between the language analyzing means 2 and the prosodic generation means 7, and stores the sequence of the language information 3 obtained by the language analyzing means 2 from a sentence unit of the text 1.

The prosodic generation means 7 employs the prosodic control rule on the basis of the linguistic context 17 to determine and output the prosodic parameter 8 for pitch, duration, a pause or the like, the image storage means 10 stores a facial or body image corresponding to the linguistic context 17, and the image control means 12 is designed to retrieve an image using the prosodic parameter 8, with reference to the image storage means 10 and then determine the moving image 13 to be outputted.

An operation will now be described.

The input text 1 composed of sentences of mixed Japanese Kanji and Kana characters is inputted to the language analyzing means 2. It is assumed that the text is the same as that in Embodiment Mode 1. The language analyzing means 2 determines segments contained in the text with reference to a dictionary, and then performs a morphological analysis processing in which pronunciation of each segment, word classes, accent types, and the like are extracted. The language information 3 is outputted from the language analyzing means 2, and is composed of information including pronunciation of words or segments, word classes, and accent types, which is required for the synthesis by rule.

The context storage means 16 stores as the linguistic context 17 the sequence of language information 3 obtained by the language analyzing means 2 from a sentence unit of the text 1. The linguistic context 17 is assumed to be the same as that in Embodiment Mode 3.

The synthetic parameter generation means 4 is comprised of the acoustic processing means 5 and the prosodic generation means 7. The acoustic processing means 5 extracts the acoustic parameter 6 corresponding to pronunciation of words or segments, with reference to an acoustic dictionary, on the basis of the above language information 3. The acoustic parameter 6 is assumed to be tie same as that in Embodiment Mode 1.

The prosodic generation means 7 employs the prosodic control rule on the basis of the above linguistic context 17 to determine and output the prosodic parameter 8. For example, a correlation between the linguistic context 17 and strength of accent components in a point pitch model is obtained in advance by a statistic learning technique such as quantification class I, to thereby determine the strength of the accent components relative to the linguistic context 17 that has been inputted.

The speech synthesis means 9 generates synthetic speech with the acoustic parameter 6 and the prosodic parameter 8 to be then outputted by means of a speaker and the like.

The image storage means 10 stores the image 11 representing a facial expression and motion of the human so as to correspond to the prosodic parameters 8. The format with which the prosodic parameter 8 is stored is assumed to be the same as that in Embodiment Mode 1.

The image control means 12 reads out the image 11 complying with the prosodic parameter 8 with reference to the above image storage means 10 on the basis of the prosodic parameter 8 outputted from the above prosodic generation means 7. The moving image 13 is then outputted by presenting the image 11 in synchronism with an input time of the prosodic parameter 8.

The image display means 14 displays the above moving image 13 on a monitor or the like.

As described above, this moving image generation apparatus is designed to perform an image control based on the context of the language information obtained from the text 1, to thereby generate a moving image at the same time of the prosodeme from a context of the linguistic characters among segments.

That is, according to this apparatus, the context storage means 16 stores language information in a text for one sentence. The image storage means 10 stores a facial or body image corresponding to the linguistic context 17. The image control means 12 retrieves an image, with reference to the image storage means 10, using the prosodic parameter 8, and then determines the moving image 13 to be outputted.

With such an arrangement, since the prosodeme is controlled from a context of the linguistic characteristic among the segments in the text to generate a moving image by the prosodeme, the prosodeme, which reflects the context features of the text, and the moving image generation can be simultaneously attained.

### Embodiment Mode 5.

Now, Fig. 5 is a block diagram showing a moving image generation apparatus in accordance with Embodiment Mode 5.

In Fig. 5, the identical parts with that of Embodiment Mode 1 shown in Fig. 1 are shown designated by the same reference numerals, and an explanation thereof will be omitted. A new reference numeral 18 indicates an image table storage means for storing as an image table 19 a correlation of the language information in the text and a facial or body image by a statistic technique; and 20, an image table reference means for retrieving the image table 19 corresponding to the language information with reference to the image table storage means 18 and then determining a moving image 13 to be outputted.

An operation will now be described.

The input text 1 composed of sentences of mixed Japanese Kanji and Kana characters is inputted to the language analyzing means 2. It is assumed that the text is the same as that in Embodiment Mode 1. The language analyzing means 2 determines segments contained in the text with reference to a dictionary to performs a morphological analysis processing in which pronunciation of each segment, word classes, accent types, and the like are extracted. The language information 3 is outputted from the language analyzing means 2, and is composed of information including pronunciation of words or segments, word classes, and accent types, which is required for the synthesis by rule.

The synthetic parameter generation means 4 is comprised of the acoustic processing means 5 and the prosodic generation means 7. The acoustic processing means 5 extracts the acoustic parameter 6 corresponding to pronunciation of words or segments, with reference to an acoustic dictionary, on the basis of the above language information 3. The acoustic parameter 6 is assumed to be the same as that in Embodiment Mode 1. The prosodic generation means 7 employs the prosodic control rule on the basis of the above language information 3 to determine and output the prosodic parameter 8.

The speech synthesis means 9 generates synthetic speech with the acoustic parameter 6 and the prosodic parameter 8 to be then outputted by means of a speaker and the like.

The image table storage means 18 stores the image table 19 that tables a correlation between the language information 3 and the image 11 representing a facial expression or motion of the human. As a format of the image table, one image corresponding to the language information 3 in a single segment is provided, for example. The image table 19 may be obtained by statistically learning a relation between the language information 3 and a facial expression or motion of the human. As a learning method, an image indicating that one person is talking is accumulated in each segment, and each image is stored together with the language information for the segment. One image is then selected from an image set corresponding to a piece of language information to store a correlation to the language information in a table format. The image set is made average, which is used for the selected image.

The image table reference means 20 provides the image 11 based on the language information 3 obtained by the language analyzing means 2 with reference to the image table 19 stored in the image table storage means 18. The image 11 is then generated in the order of presenting the language information to thereby output the moving image 13.

The image display means 14 displays the above moving image 13 on a monitor or the like.

As described above, this moving image generation apparatus is designed to perform an image control with reference to the image table prepared by a statistic technique on the basis of the language information obtained from the text to make it possible to provide the moving image reflecting the statistic viewpoint.

That is, according to this apparatus, the image table storage means 18 stores as a table a correlation between the language information in the text and a facial expression or motion of the human by a statistic technique. The image table reference means 20 retrieves the image table 19, with reference to the image table storage means 18, on the basis of the language information, and then determines an image to be outputted.

With such an arrangement, since the statistic technique allows the image associated with the linguistic characteristics in segments of a text to be provided, the moving image reflecting the statistic viewpoint may be provided. Consequently, a more natural information provision can be realized.

### Embodiment Mode 6.

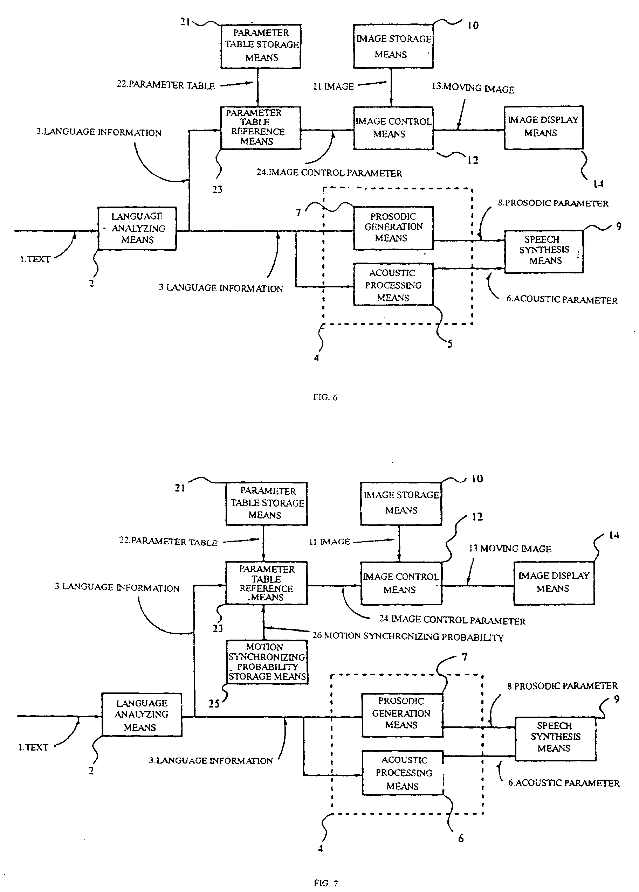

Now, Fig. 6 is a block diagram showing a moving image generation apparatus in accordance with Embodiment Mode 6.

In Fig. 6, the identical parts with that of Embodiment Mode 1 shown in Fig. 1 are shown designated by the same reference numerals, and an explanation thereof will be omitted. A new reference numeral 21 indicates a parameter table storage means for storing as a parameter table a correlation between the language information 3 in the text and an image control parameter 24 representing a human face or body by a statistic technique; and 23, a parameter table reference means for retrieving the parameter table, with reference to the parameter storage means, on the basis of the language information to thereby output the image control parameter 24.

Further, according to Embodiment Mode 6, the image storage means 10 is designed to store a facial or body image corresponding to the image control parameter indicating the manner of the facial expression or motion, and to retrieve and output the image corresponding to the image control parameter with reference to the image storage means 10.

An operation will now be described.

The input text 1 composed of sentences of mixed Japanese Kanji and Kana characters is inputted to the language analyzing means 2. It is assumed that the text is the same as that in Embodiment Mode 1. The language analyzing means 2 determines segments contained in the text with reference to a dictionary to performs a morphological analysis processing in which pronunciation of each segment, word classes, accent types, and the like are extracted. The language information 3 is outputted from the language analyzing means 2, and is composed of information including pronunciation of words or segments, word classes, and accent types, which is required for the synthesis by rule.

The synthetic parameter generation means 4 is comprised of the acoustic processing means 5 and the prosodic generation means 7. The acoustic processing means 5 extracts the acoustic parameter 6 corresponding to pronunciation of words or segments, with reference to an acoustic dictionary, on the basis of the above language information 3. The acoustic parameter 6 is assumed to be the same as that in Embodiment Mode 1. The prosodic generation means 7 employs the prosodic control rule on the basis of the above language information 3 to determine and output the prosodic parameter 8.

The speech synthesis means 9 generates synthetic speech with the acoustic parameter 6 and the prosodic parameter 8 to be then outputted by means of a speaker and the like.

The parameter table storage means 21 stores a parameter table 22 that tables a correlation between the language information 3 and a parameter indicating the manner of the image representing a facial expression or motion of the human. As a format, a parameter indicating a manner of a facial expression or motion of the human corresponding to the language information 3 in a single segment is provided, for example. This parameter table 22 may be obtained by statistically learning a relation between the language information 3 and the manner of the facial expression or motion of the human. The manner of the facial expression or motion of the human is assumed to quantify an angle in which the human head is inclined forwardly, the thickness of lip, an interval of palpebras interior and superior, and the like. As a learning method, a parameter indicating a manner of a facial expression or motion of one person who is talking is accumulated in each segment, and each parameter is stored together with the language information for the segment. One of a parameter set corresponding to a piece of language information is selected to store a correlation to the language information in a table format. An average in the parameter set is used as a parameter selection criterion.

The parameter table reference means 23 outputs the image control parameter 24, with reference to the parameter table 22 stored in the parameter table storage means 21, on the basis of the language information obtained by the language analyzing means 2.

The image storage means 10 stores the image 11 indicating a facial expression or motion of the human together with a parameter indicating a manner of the motion or facial expression. The image control means 12 reads out the image 11 stored in the above image storage means 10 with the image control parameter 24 outputted from the parameter table reference means 23. The image 11 is then generated in the order of presenting the language information to thereby output the moving image 13.

The image display means 14 displays the above moving image 13 on a monitor or the like.

As described above, this moving image generation apparatus is designed to perform an image control, with reference to the parameter table prepared by a statistic technique, on the basis of the language information obtained from the text to make it possible to provide the moving image that reflects the statistic viewpoint and controls a detailed motion of face or sites in the body.

That is, according to this apparatus, the parameter table storage means 21 stores as a table a correlation between the language information in the text and a parameter indicating a manner of a human face of body by a statistic technique. The parameter reference means 23 retrieves the parameter table 22, with reference to the parameter table storage means 21, on the basis of the language information, and then output the image control parameter 24. The image storage means 10 stores the image indicating the human face or body together with a parameter indicating a manner of the facial expression or motion. The image control means 12 retrieves and output the image with the image control parameter 24 with reference to the image storage means 10.

With such an arrangement, since a more detailed image in which the linguistic characteristics in segments of a text are associated with a manner of a motion or facial expression of the human can be provided by a statistic technique, the moving image reflecting the statistic viewpoint may be provided. Consequently, a more natural information provision can be realized.

### Embodiment Mode 7.

Now, Fig. 7 is a block diagram showing a moving image generation apparatus in accordance with Embodiment Mode 7.

In Fig. 7, the identical parts with that of Embodiment Mode 6 shown in Fig. 6 are shown designated by the same reference numerals, and an explanation thereof will be omitted. A new reference numeral 25 indicates a motion synchronizing probability storage means for storing a table that describes a motion synchronizing probability where a plurality of motions occur in a synchronous manner with a piece of the language information 3. According to Embodiment Mode 7, the parameter table reference means 23 is designed to obtain the motion synchronizing probability 26 in a plurality of sites of the human body, with reference to the motion synchronizing probability storage means 25 and the parameter table storage means 21, on the basis of the language information 3 and to retrieve the parameter table 22 to output the image control parameter 24 for the sites where a threshold value of the above motion synchronizing probability is over a fixed value.

An operation will now be described.

The input text 1 composed of sentences of mixed Japanese Kanji and Kana characters is inputted to the language analyzing means 2. It is assumed that the text is the same as that in Embodiment Mode 1. The language analyzing means 2 determines segments contained in the text with reference to a dictionary to performs a morphological analysis processing in which pronunciation of each segment, word classes, accent types, and the like are extracted. The language information 3 is outputted from the language analyzing means 2, and is composed of information including pronunciation of words or segments, word classes, and accent types, which is required for the synthesis by rule.

The synthetic parameter generation means 4 is comprised of the acoustic processing means 5 and the prosodic generation means 7. The acoustic processing means 5 extracts the acoustic parameter 6 corresponding to pronunciation of words or segments, with reference to an acoustic dictionary, on the basis of the above language information 3. The acoustic parameter 6 is assumed to be the same as that in Embodiment Mode 1. The prosodic generation means 7 employs the prosodic control rule on the basis of the above language information 3 to determine and output the prosodic parameter 8.

The speech synthesis means 9 generates synthetic speech with the acoustic parameter 6 and the prosodic parameter 8 to be then outputted by means of a speaker and the like.

The motion synchronizing probability storage means 25 stores a table that describes the motion synchronizing probability 26 where a plurality of motions concurrently occur when a piece of language information is provided. The table, for example, where motions such as a head motion, an eye motion, and a mouth motion are categorized in detail, describes a probability in which the motion of each category to the language information is carried out. This learning of table is performed by a technique in which an image indicating that a person is talking is collected, data for face or sites of the human body in association with a motion or facial expression of the human is accumulated for each language information, and a mean occurrence probability of the motion or facial expression is obtained.

The parameter table storage means 21 stores the parameter table 22 that tables a correlation between the language information 3 and a parameter indicating a manner of an image representing a facial expression or motion of the human. A format for the parameter table is assumed to be the same as that in Embodiment Mode 6.

The parameter table reference means 23 reads out a probability, or the motion synchronizing probability 26, in which a variety of sites of the human body moves in response to the language information 3, initially with reference to the motion synchronizing probability storage means 25, on the basis of the language information 3 obtained by the language analyzing means 2. Then, with reference to the parameter table 22 stored in the parameter table storage means 21, the image control parameter 24 for sites in which the motion synchronizing probability 26 is over a certain threshold value is extracted and then outputted.

The image storage means 10 stores the image 11 indicating a facial expression or motion of the human together with a parameter indicating a manner of the motion or facial expression.

The image control means 12 reads out the image 11 stored in the above image storage means 10 with the image control parameter 24 outputted from the parameter table reference means 23. The image 11 is then generated in the order of presenting the language information to thereby output the moving image 13.

The image display means 14 displays the above moving image 13 on a monitor or the like.

As described above, this moving image generation system is designed to perform an image control with reference to the parameter table prepared by a statistic technique on the basis of the language information obtained from the text and to make it possible to provide the moving image that reflects the statistic viewpoint and controls a plurality of detailed motions such as face or sites of the human body at the same time.

That is, according to this apparatus, the motion synchronizing probability storage means 25 statistically calculates the motion synchronizing probability 26 in which a plurality of motions or facial expressions of the human occur relative to the language information in the text to be then stored. The parameter table storage means 21 stores as a table a correlation between the language information in the text and a parameter indicating a manner of a facial expression or motion of the human by a statistic technique. The parameter table reference means 23 obtains the motion synchronizing probability 26 for a plurality of sites of the human body, with reference to the motion synchronizing probability storage means 25 and the parameter table storage means 21, on the basis of the language information 3, and then retrieves the parameter table 22 to output the image control parameter 24 for the sites in which a threshold value of the above motion synchronizing probability 26 is over a given value.

The image storage means 10 stores an image indicating a facial expression or motion of the human together with a parameter indicating a manner of the facial expression or motion.

The image control means 12 retrieves an image with the image control parameter 24 with reference to the image storage means 10 to be then outputted.

With such an arrangement, a more detailed image in which the linguistic characteristics in segments of a text are associated with a manner of a motion or facial expression of the human can be provided by a statistic technique. Further, since an image indicating a plurality of motions or facial expression can be concurrently controlled, the moving image reflecting the statistic viewpoint may be provided. Consequently, a more natural information provision can be realized.

### Embodiment Mode 8.

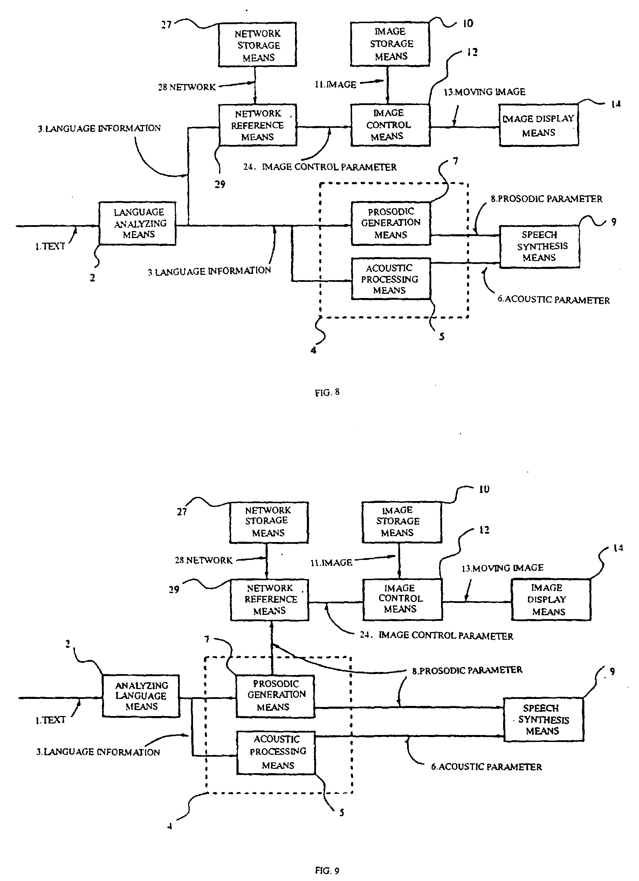

Now, Fig. 8 is a block diagram showing a moving image generation apparatus in accordance with Embodiment Mode 8.

In Fig. 8, the identical parts with that of Embodiment Mode 1 shown in Fig. 1 are shown designated by the same reference numerals, and an explanation thereof will be omitted. A new reference numeral 27 indicates a network storage means for storing as a network 28 a set of a state relating to a facial expression or motion of the human, the language information 3 serving as a control category, a transition destination state for a state transition in response to an acceptance of the control category, and a parameter indicating a manner of a facial expression or motion of the human serving as a value given in each state transition; and 29, a network reference means for reading out the network 28 relative to the language information 3 in the text with reference to the network storage means 27, to transition the state of network when the network accepts the above language information 3 as a control category, and to output the image control parameter 24 at the time of transition.
Now, according to Embodiment Mode 8, the image storage means 10 stores an image indicating a human face or body in correspondence with the image control parameter 24 indicating a manner of a facial expression or motion, and the image control means 12 is designed to retrieve the image with the image control parameter 24 with reference to the image storage means 10 to be then outputted.

An operation will now be described.

The input text 1 composed of sentences of mixed Japanese Kanji and Kana characters is inputted to the language analyzing means 2. It is assumed that the text is the same as that in Embodiment Mode 1. The language analyzing means 2 determines segments contained in the text with reference to a dictionary to performs a morphological analysis processing in which pronunciation of each segment, word classes, accent types, and the like are extracted. The language information 3 is outputted from the language analyzing means 2, and is composed of information including pronunciation of words or segments, word classes, and accent types, which is required for the synthesis by rule.

The synthetic parameter generation means 4 is comprised of the acoustic processing means 5 and the prosodic generation means 7. The acoustic processing means 5 extracts the acoustic parameter 6 corresponding to pronunciation of words or segments, with reference to an acoustic dictionary, on the basis of the above language information 3. The acoustic parameter 6 is assumed to be the same as that in Embodiment Mode 1. The prosodic generation means 7 employs the prosodic control rule on the basis of the above language information 3 to determine and output the prosodic parameter 8.

The speech synthesis means 9 generates synthetic speech with the acoustic parameter 6 and the prosodic parameter 8 to be then outputted by means of a speaker and the like.

The network storage means 27 stores as the network 28 a set of a state relating to a facial expression or motion of the human, the language information 3 serving as a control category, the transition destination state for a state transition in response to an acceptance of the control category, and a parameter indicating a manner of a facial expression or motion of the human serving as a value given in each state transition.

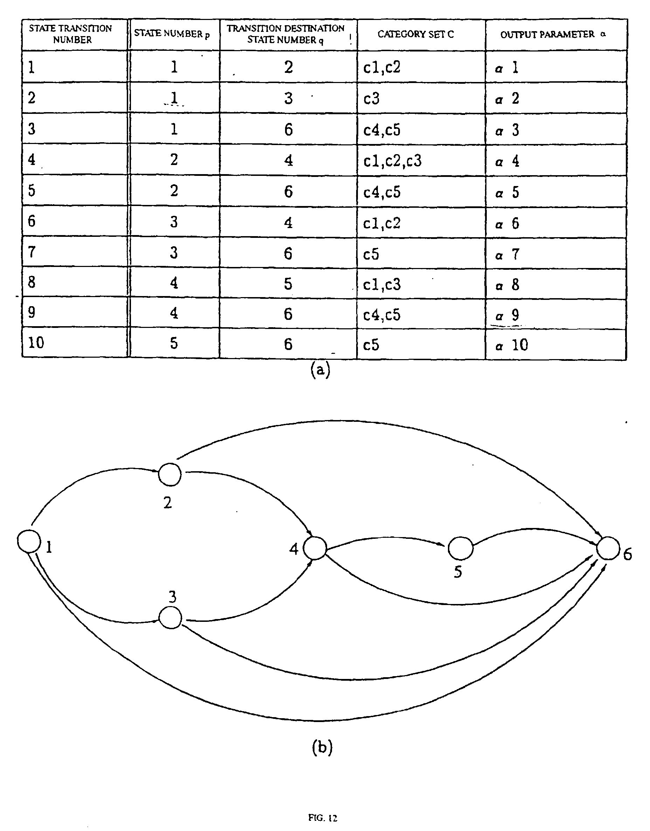

A configuration example of the network is illustrated in Fig. 12.

In Fig. 12, assume a state number p, a language information C serving as a control category acceptable, a transition destination state number q, and an output parameter to be outputted at the time of transition. Fig, 12(a) is a table showing an inner portion of the network, and Fig. 12(b) is a simulation diagram showing a relation among the states. In Fig. 12(b), each small circle corresponds to a state, and an arc therebetween corresponds to a state transition. Here, the state 1 indicates a top-of-sentence and the state 6 indicates an end-of-sentence.

The network reference means 29 retrieves the network 28 corresponding to the language information 3 that has been inputted and corresponding to the state number that is currently maintained, with reference to the network storage means 27. The transition destination state number and the output parameter that are contained in the network 28 are read out, and the above transition destination state number is replaced with a new state number to be maintained. The above output parameter is then outputted as the image control parameter 24. By way of example, in the case where the language information sequence is inputted in the order of {c3, c2, and c5} into the network shown in Fig. 12, with reference to the states 2, 6, and 9 of the network, in the stated order, a sequence of the image control parameters that is to be outputted is outputted in the order of { 2, 6, and 9}. When the state number is set 6 as is in the state of the end-of-sentence, the state is returned to a top-of-sentence, where the state number is then 1.

The image storage means 10 stores the image 11 indicating a facial expression or motion of the human together with a parameter indicating a manner of the motion or facial expression.

The image control means 12 reads out the image 11 stored in the above image storage means 10 with the image control parameter 24 outputted from the parameter table reference means 23. The image 11 is then generated in the order of presenting the language information to thereby output the moving image 13.

The image display means 14 displays the above moving image 13 on a monitor or the like.

As described above, this moving image generation apparatus is designed to perform an image control with reference to the network on the basis of the language information obtained from the text and to make it possible to provide the moving image, using a simple model, which reflects a context of the language information.

That is, according to this apparatus, the network storage means 27 stores as the network 28 a set of a state relating to a facial expression or motion of the human, the language information 3 serving as a control category, a transition destination state for a state transition in response to an acceptance of the control category, and a parameter indicating a manner of a facial expression or motion of the human serving as a value given in each state transition.

The network reference means 29 reads out the network 28 relative to the language information 3 in the text 1 with reference to the above network storage means 27, to transition the state of network when the network accepts the above language information 3 as a control category, and to output the image control parameter at the tine of transition.

The image storage means 10 stores an image indicating a human face or body together with a parameter indicating a manner of a facial expression or motion.

The image control means 12 retrieves the image with the image control parameter 24 with reference to the image storage means 10 to be then outputted.

With such an arrangement, since the moving image that reflects a linguistic context of segments in a text can be generated, a more natural information provision can be realized so that a simple mode allows a context feature of the text to be reflected.

### Embodiment Mode 9.

Now, Fig. 9 is a block diagram showing a moving image generation apparatus in accordance with Embodiment Mode 9.

In Fig.9, the identical parts with that of Embodiment Mode 8 shown in Fig. 8 are shown designated by the same reference numerals, and an explanation thereof will be omitted.

According to Embodiment Mode 9, the network storage means 27 stores as the network 28 a set of a state relating to a facial expression or motion of the human, the prosodic parameter 8 serving as a control category, a transition destination state for a state transition in response to an acceptance of the control category, and a parameter indicating a manner of a facial expression or motion of the human serving as a value given in each state transition.

Further, the network reference means 29 is designed to read out the network 28 relative to the prosodic parameter 8 in the text with reference to the network storage means 27, to transition the state of network when the network accepts the above prosodic parameter 8 as a control category, and to output the image control parameter 24 at the time of transition.

An operation will now be described.

The input text 1 composed of sentences of mixed Japanese Kanji and Kana characters is inputted to the language analyzing means 2. It is assumed that the text is the same as that in Embodiment Mode 1. The language analyzing means 2 determines segments contained in the text with reference to a dictionary to performs a morphological analysis processing in which pronunciation of each segment, word classes, accent types, and the like are extracted. The language information 3 is outputted from the language analyzing means 2, and is composed of information including pronunciation of words or segments, word classes, and accent types, which is required for the synthesis by rule.

The synthetic parameter generation means 4 is comprised of the acoustic processing means 5 and the prosodic generation means 7. The acoustic processing means 5 extracts the acoustic parameter 6 corresponding to pronunciation of words or segments, with reference to an acoustic dictionary, on the basis of the above language information 3. The acoustic parameter 6 is assumed to be tie same as that in Embodiment Mode 1. The prosodic generation means 7 employs the prosodic control rule on the basis of the above language information 3 to determine and output the prosodic parameter 8.

The speech synthesis means 9 generates synthetic speech with the acoustic parameter 6 and the prosodic parameter 8 to be then outputted by means of a speaker and the like.

The network storage means 27 stores as the network 28 a set of a state relating to a facial expression or motion of the human, the prosodic parameter 8 serving as a control category, the transition destination state for a state transition in response to an acceptance of the control category, and a parameter indicating a manner of a facial expression or motion of the human serving as a value given in each state transition.

A configuration example of the network is illustrated in Fig. 12.

The configuration of the network is the same as that in Embodiment Mode 8 except that the control category C to be accepted is the prosodic parameter 8. An application of the prosodic parameter 8 as the control category is implemented by methods such that different indices are assigned depending upon magnitude of the accents, and that a pause insertion is clarified.

The network reference means 29 retrieves the network 28 corresponding to the prosodic parameter 8 that has been inputted and corresponding to the state number that is currently maintained, with reference to the network storage means 27. The transition destination state number and the output parameter that are contained in the network 28 are read out, and the above transition destination state number is replaced with a new state number to be maintained. The above output parameter is then outputted as the image control parameter 24.

The image storage means 10 stores the image 11 indicating a facial expression or motion of the human together with a parameter indicating a manner of the motion or facial expression.

The image control means 12 reads out the image 11 stored in the above image storage means 10 with the image control parameter 24 outputted from the parameter table reference means 23. The image 11 is then generated in the order of presenting the language information to thereby output the moving image 13.

The image display means 14 displays the above moving image 13 on a monitor or the like.

As described above, this moving image generation apparatus is designed to perform an image control with reference to the network on the basis of the prosodic information obtained from the text and to make it possible to provide the moving image, using a simple model, which reflects a context of the language information and is synchronized with the prosodic information.

That is, according to this apparatus, the network storage means 27 stores as the network 28 a set of a state relating to a facial expression or motion of the human, the prosodic parameter 8 serving as a control category, a transition destination state for a state transition in response to an acceptance of the control category, and a parameter indicating a manner of a facial expression or motion of the human serving as a value given in each state transition.

The network reference means 29 reads out the network 28 relative to the prosodic parameter 8 in the text with reference to the above network storage means 27, to transition the state of network when the network 28 accepts the above prosodic parameter 8 as a control category, and to output the image control parameter at the time of transition.

The image storage means 10 stores an image indicating a human face or body together with a parameter indicating a manner of a facial expression or motion.

The image control means 12 retrieves the image with the image control parameter 24 with reference to the image storage means 10 to be then outputted.

With such an arrangement, since the moving image that is synchronized with a context of the prosodic information can be generated, a more natural information provision can be realized so that a simple mode allows a context feature of the text to be reflected.

### Embodiment Mode 10.

Now, Fig. 10 is a block diagram showing an image control network learning apparatus in a moving image generation apparatus in accordance with Embodiment Mode 10.

In Fig. 10, reference numeral 27 denotes a network storage means as is similar to that in Embodiment Modes 8 and 9, in which a set of a state relating to a facial expression or motion of the human, the language information 3 serving as a control category, a transition destination state for a state transition in response to an acceptance of the control category, and a parameter indicating a manner of a facial expression or motion of the human serving as a value given in each state transition is stored as the network 28.

A new reference numeral 30 indicates a learning image data storage means for storing as learning image data 31 an image indicating a face or body of the human who is speaking sentences in correspondence with the language information or the prosodic information of the spoken sentences.

Reference numeral 32 denotes an error calculation means, where the learning image data 31 read out from the above learning image data storage means 30 is inputted, for reading out from the above network storage means 27 the state transition from the state of the network 28, based on the control category of the learning image data, which is currently being maintained, the state being replaced with the transition destination state and then maintained, and for calculating error data 33 between an image parameter contained in the above state transition and an image parameter of the learning image data to be then outputted.

Reference numeral 34 denotes a learning target arc determination means for selecting one state transition, the above error data of which is the lowest of all the network, to be outputted as a learning target arc 35.

Reference numeral 36 denotes a transition split means for splitting a set of control category acceptable for the above learning target arc 35 by a combination in which the sum of an error after the split is made minimum, to replace the state transition correspondingly, and for calculating an error of the image parameter among the learning target arcs after the split.

Reference numeral 38 denotes a state split means for splitting a transition original state by falling into halves the category of the state transition that transitions to the transition original state of the learning target arc 35 so that the sum of the error after the split of the above learning target arc 35 is made minimum, to replace the state transition correspondingly, and for calculating an error of the image parameter among the learning target arcs after the split.

Reference numeral 40 denotes an optimum split determination means for determining the error outputted from the above transition split means 36 and the error outputted from the above state split means 38 to select either modified state transition to rewrite the state transition stored in the above network storage means 27.

Incidentally, reference numeral 37 denotes a learning target arc after a transition split; 39, a learning target arc after a state split; and 41, a writing network.

An operation will now be described.

The learning image data storage means 30 stores the learning image data 31 applied to a learning of the network. The learning image data 31 associates an image indicating of a face or body of the human who is speaking sentences with the language information or the prosodic information of the spoken sentences.

The network storage means 27 stores as the network 28 a set of a state relating to a facial expression or motion of the human, the language information 3 serving as a control category, a transition destination state for a state transition in response to an acceptance of the control category, and a parameter indicating a manner of a facial expression or motion of the human serving as a value given in each state transition.

The error calculation means 32, where the learning image data 31 read out from the above learning image data storage means 30 is inputted, reads out from the above network storage means 27 the state transition from the state of the network 28, based on the control category of the learning image data, which is currently being maintained, the state being replaced with the transition destination state and then maintained.

The learning target arc determination means 34 retrieves the error data 33 in the whole network, and determines the state transition where the above error is made maximum to be outputted as the learning target arc 35.

The transition split means 36 splits a set of the control category acceptable for the above learning target arc, replaces the state transition correspondingly, and then calculates an error of the image parameter among the learning target arcs after the split.

In Fig. 12, in the case where the state 4 is determined as a learning target arc, for example, the category set C is initially split into two category sets by all possible split methods. In the state 4, three splits, i.e., {c1} and {c2, c3}, {c2} and {c1, c3}, and {c3} and {c1, c2} will be available.

Subsequently, the error of the learning target arc is calculated again in each of the two split category sets by all of these split methods. The calculation of the error is performed again in such a manner that mean values of the image parameter in the two category sets are obtained as 4', and 4'', respectively, and the difference between the mean value and the image parameter value of the learning image data for each category set is accumulated, an average value of which is maintained as an error. The split method where the sum of the errors is minimum is then selected to correct the category set of the learning target arc to one category set after the split, while the image control parameter is also replaced with a category set after the split.

Further, the state transition where the other category set after the acceptance of split is newly prepared, whereas the image control parameter is also changed to the other category set after the split.

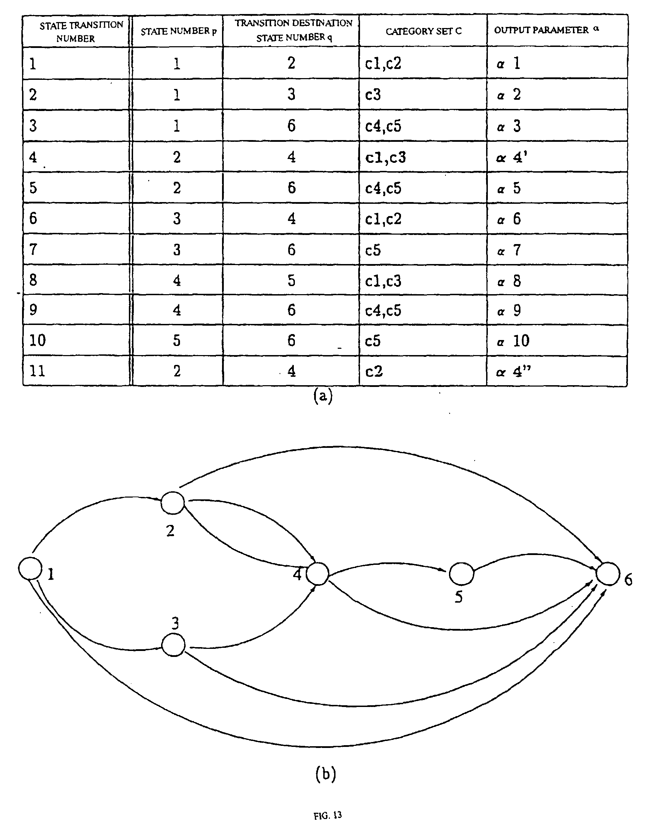

In the case where the sum of the error is minimum when the category set is separated into a set of {c1, c3} and {c2}, for example, the network is replaced as shown in Fig. 13.

The thus replaced learning target arc is outputted as the after-transition-split learning target arc 37.

The state split means 38 splits the transition original state of the above learning target arc, replaces the state transition correspondingly, and calculates an error of the image parameter among the learning target arcs after the split.

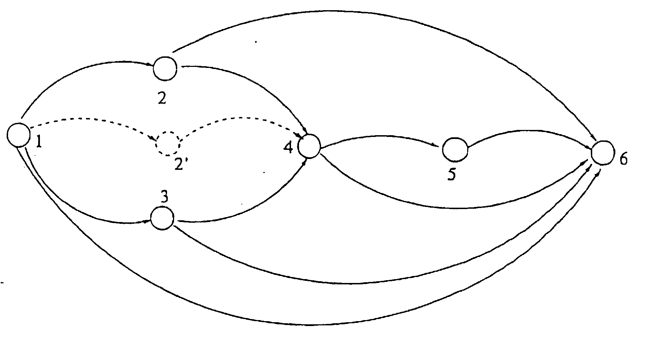

In Fig. 12, for example, when the state transition 4 is determined as a learning target arc, the state corresponding to the state number of the learning target arc, as shown in Fig. 14, i.e., the state 2 that is a transition original state, is taken as a target to be split, and a new state 2' is prepared. Here, all the state transitions to be transitioned to the state 2 are split into halves by a combination of the category sets, and split into the state transition to be transitioned to the state 2 and the state transition to be transitioned to the state 2'.

With such state split, the learning target arc is separated into the transition from the state 2 to the state 4 and the transition from the state 2' to the state 4. At this time, the error of the learning target arc is calculated again by all of these split methods in each of the two groups which are to be split depending upon the transition original state. The calculation of the error is performed again in such a manner that mean values of the image parameter in the two groups are obtained as 4', and 4'', respectively, and the difference between the mean value and the image parameter value of the learning image data for each group is accumulated, an average value of which is maintained as an error.

The state split method where the sum of the errors is made minimum is then selected to replace the image control parameter of the separated learning target arcs with one group thereof after the split.

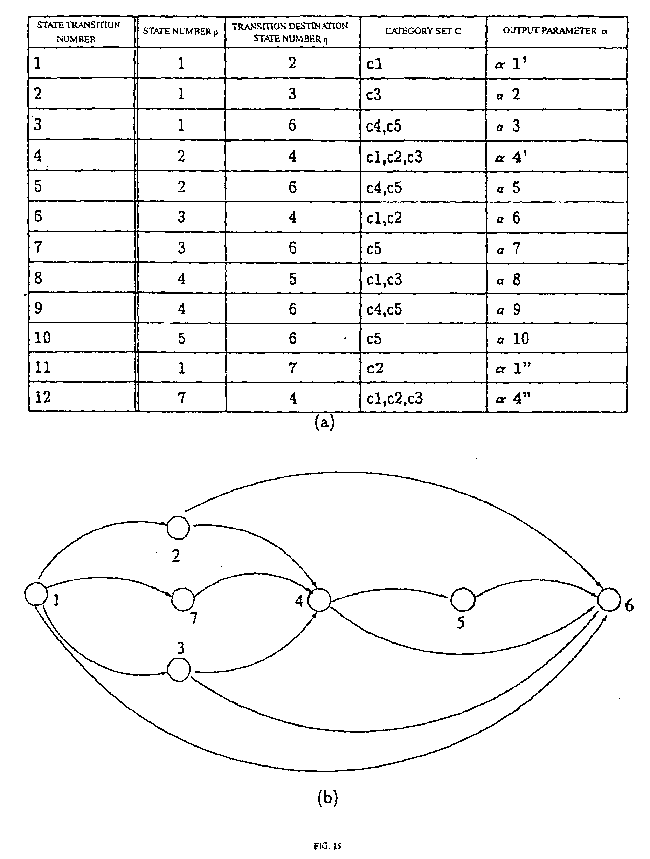

Here, in the case where the sum of the error is minimum when the preceding category set is only separated into a set of {c1} and {c2}, for example, the network is replaced as shown in Fig. 15.

The thus replaced learning target arc is outputted as the after-state-split learning target arc 39.

The optimum split determination means 40 determines the error in the after-transition-split learning target arc 37 which is outputted from the above transition split means 36 and the error in the after-state-split learning target arc 38 which is outputted from the above state split means 38, selects the learning target arc after the split where the sum of the errors is made smaller, setting a set of the state transition replaced by the selected split method as the rewriting network 41, and rewrites the network 28 stored in the above network storage means 27.

A learning of the image control network is carried out by repeating the foregoing operation a given times.

As described above, this image control network learning apparatus is designed to perform a learning of the network applied to the moving image generation apparatus in Embodiment Mode 9 or 10.

That is, according to this apparatus, the learning image data storage means 30 stores a facial or body image of the human who is speaking together with the language information or the prosodic information of the spoken text in association therewith.

The network storage means 27 stores as a network a set of a state relating to a facial expression or motion of the human, the language information or the prosodic parameter serving as a control category, a transition destination state for a state transition in response to an acceptance of the control category, and a parameter indicating a manner of a facial expression or motion of the human serving as a value given in each state transition.

The error calculation means 32, where the learning image data read out from the above learning image storage means 30 is inputted, reads out from the above network storage means 27 the state transition from the state of the network, based on the control category of the learning image data, which is currently being maintained, the state being replaced with the transition destination state and then maintained, and calculates and output an error between an image parameter contained in the above state transition and an image parameter of the learning image data.

The learning target arc determination means 34 selects one state transition, the above error data of which is the lowest of all the network, to be determined as a learning target arc.

The transition split means 36 splits a set of control category acceptable for the above learning target arc by a combination in which the sum of the error after the split is minimum, to replace the state transition correspondingly, and calculates an error of the image parameter among the learning target arcs after the split.

The state split means 38 splits a transition original state by falling into halves the category of the state transition that transitions to the transition original state of the learning target arc so that the sum of the error after the split of the above learning target arc is minimum, replaces the state transition correspondingly, and calculates an error of the image parameter among the learning target arcs after the split.

The optimum split determination means 40 determines the error outputted from the above transition split means 36 and the error outputted from the above state split means 38, and then selects either modified state transition to rewrite the state transition stored in the above network storage means 27.

With such an arrangement, since a correlation is modeled between the language information or the prosodic information of the text, and a facial expression or motion of the human who is speaking it, a learning of the network where a moving image generation apparatus will be feasible which provides a more natural information provision in which the context feature of the text is actively utilized can be performed by a convenient learning apparatus.

### Another Embodiment Mode A.

The input text 1 in Embodiment Modes 1 to 9 is composed of sentences of mixed Japanese Kanji and Kana characters, to which is not limited, and sentences consisting of Kana characters or sentences consisting of characters written in any foreign language such as in English may also be available.

### Another Embodiment Mode B.

The language analyzing means 2 in Embodiment Modes 1 to 9 may includes, not only a morphological analysis processing, but also a syntactic analysis processing in which a syntactic structure of sentences is extracted by an application of grammar, and a semantic analysis processing in which a semantic structure thereof is extracted thereby.

### Another Embodiment Mode C.

The image storage means 10 in Embodiment Mode 2 prepares an image corresponding to all the kinds of phonemes, but may prepare an image corresponding to phonetic groups, into which the kinds of phonemes are classified, and to the prosodic parameter.

### Another Embodiment Mode D.

The context storage means 16 in Embodiment Modes 3 and 4 may store a set of pronunciation of each segment ranging from starting segment of an expiratory paragraph inclusive of a top-of-sentence to a terminating segment of the expiratory paragraph inclusive of an end-of-sentence, a word class, and an accent type in time-sequential order.

### Another Embodiment Mode E.

In the image storage means 10 in Embodiment Mode 3, one image is provided correspondingly for language information of a current segment and a following segment in a single segment.

### Another Embodiment Mode F.

In the image storage means 10 in Embodiment Mode 3, one image is provided correspondingly for language information of a prior segment, a current segment and a following segment in a single segment.

### Another Embodiment Mode G.

The image table storage means 18 in Embodiment Mode 5 may include a technique for selecting one image from an image set corresponding to a piece of language information while learning the image table, in which images having relatively small difference are collected as small sets in an image set, and, out of these, one representative image can be selected from the small set having a maximum element.

### Another Embodiment Mode H.

The image table in the image table storage means 18 according to Embodiment Mode 5 should indicate a correlation between the image and the linguistic context 17 in Embodiment Mode 3, and the image table reference means 20 may retrieve the image table by making the above linguistic context 17 as an input.

### Another Embodiment Mode I.

The parameter table storage means 21 in Embodiment Mode 6 may be applied to a technique for determining a representative value from a parameter set corresponding to a piece of language information while learning the parameter table, in which an output coefficient may be used which is obtained by a multivariate analysis technique represented by a qualification class I, as rending the language information a control factor.

### Another Embodiment Mode J.

The parameter table in the parameter table storage means 21 according to Embodiment Modes 6 and 7 should indicate a correlation between the image control parameter 24 and the linguistic context 17 in Embodiment Mode 3, and the parameter table reference means 23 may retrieve the parameter table by making the above linguistic context 17 as an input.

### Another Embodiment Mode K.

The network storage means 27 according to Embodiment Mode 10 may use as a control category the prosodic parameter as has been described in Embodiment Mode 9.

### Another Embodiment Mode L.

The state split means 38 according to Embodiment mode 10 not only aims at the transition original state of the learning target arc to be split, but also may split the transition destination state by falling into halves the control category of the state transition succeeding the transition destination state of the learning target arc. The state optimum split determination means 40 may selects an optimum split technique of the three split techniques in which the learning target arc is split by the transition split means 38, and the transition original state is split and the transition destination state is split by the state split means 36.

### Another Embodiment Mode M.

The image control network learning apparatus according to Embodiment Mode 10 may employ, as a point of time when the learning is completed, a point of time when a mean error of the learning target arc is below the threshold value that is set in a separate manner, instead of a point of time when the a given number of learnings is completed.

### Another Embodiment Mode N.

The image control network learning apparatus according to Embodiment Mode 10 may employ, as a point of time when the learning is completed, a point of time when a mean error of the whole network is below the threshold value that is set in a separate manner, instead of a point of time when the a given number of learnings is completed.

### Another Embodiment Mode O.

The error calculation means 32 according to Embodiment Mode 10 may apply to the learning target arc the state transition in which an accumulation error with the learning image data for each state transition is maximum, instead of the state transition in which a mean error is maximum being applied to the learning target arc.

### Another Embodiment Mode P.

The transition split means 36 and the state split means 38 according to Embodiment Mode 10 may split so that a maximum error after split is minimum, but not split so that the sum of the error of the learning target arc after split is minimum.

### INDUSTRIAL UTILITY APPLICABILITY

As described above, the moving image generation apparatus according to the present invention generates a more natural moving image as if the human was speaking by positively using not only acoustic information obtained from an input text but also prosodic information or linguistic context information in the input text, thereby being capable of realizing more natural information provision. Further, in the image control network learning apparatus in accordance with the present invention, since a correlation is modeled between the language information or the prosodic information of the text, and a facial expression or motion of the human who is speaking it, a learning of the network where a moving image generation apparatus will be feasible which provides a more natural information provision in which the context feature of the text is effectively utilized can be performed by a convenient learning apparatus.
FIG. 1
   - 1: TEXT
   - 2: LANGUAGE ANALYZING MEANS
   - 3: LANGUAGE INFORMATION
   - 5: ACOUSTIC PROCESSING MEANS
   - 6: ACOUSTIC PARAMETER
   - 7: PROSODIC GENERATION MEANS
   - 8: PROSODIC PARAMETER
   - 9: SPEECH SYNTHESIS MEANS
   - 10: IMAGE STORAGE MEANS
   - 11: IMAGE
   - 12: IMAGE CONTROL MEANS
   - 13: MOVING IMAGE
   - 14: IMAGE DISPLAY MEANS
FIG. 2
   - 1: TEXT
   - 2: LANGUAGE ANALYZING MEANS
   - 3: LANGUAGE INFORMATION
   - 5: ACOUSTIC PROCESSING MEANS
   - 6: ACOUSTIC PARAMETER
   - 7: PROSODIC GENERATION MEANS
   - 8: PROSODIC PARAMETER
   - 9: SPEECH SYNTHESIS MEANS
   - 10: IMAGE STORAGE MEANS
   - 11: IMAGE
   - 12: IMAGE CONTROL MEANS
   - 13: MOVING IMAGE
   - 14: IMAGE DISPLAY MEANS
   - 15: PRONUNCIATION
FIG. 3
   - 1: TEXT
   - 2: LANGUAGE ANALYZING MEANS
   - 3: LANGUAGE INFORMATION
   - 5: ACOUSTIC PROCESSING MEANS
   - 6: ACOUSTIC PARAMETER
   - 7: PROSODIC GENERATION MEANS
   - 8: PROSODIC PARAMETER
   - 9: SPEECH SYNTHESIS MEANS
   - 10: IMAGE STORAGE MEANS
   - 11: IMAGE
   - 12: IMAGE CONTROL MEANS
   - 13: MOVING IMAGE
   - 14: IMAGE DISPLAY MEANS
   - 16: CONTEXT STORAGE MEANS
   - 17: LINGUISTIC CONTEXT
FIG. 4
   - 1: TEXT
   - 2: LANGUAGE ANALYZING MEANS
   - 3: LANGUAGE INFORMATION
   - 5: ACOUSTIC PROCESSING MEANS
   - 6: ACOUSTIC PARAMETER
   - 7: PROSODIC GENERATION MEANS
   - 8: PROSODIC PARAMETER
   - 9: SPEECH SYNTHESIS MEANS
   - 10: IMAGE STORAGE MEANS
   - 11: IMAGE
   - 12: IMAGE CONTROL MEANS
   - 13: MOVING IMAGE
   - 14: IMAGE DISPLAY MEANS
   - 16: CONTEXT STORAGE MEANS
   - 17: LINGUISTIC CONTEXT
FIG. 5
   - 1: TEXT
   - 2: LANGUAGE ANALYZING MEANS
   - 3: LANGUAGE INFORMATION
   - 5: ACOUSTIC PROCESSING MEANS
   - 6: ACOUSTIC PARAMETER
   - 7: PROSODIC GENERATION MEANS
   - 8: PROSODIC PARAMETER
   - 9: SPEECH SYNTHESIS MEANS
   - 13: MOVING IMAGE
   - 14: IMAGE DISPLAY MEANS
   - 18: IMAGE TABLE STORAGE MEANS
   - 19: IMAGE TABLE
   - 20: IMAGE TABLE REFERENCE MEANS
FIG. 6
   - 1: TEXT
   - 2: LANGUAGE ANALYZING MEANS
   - 3: LANGUAGE INFORMATION
   - 5: ACOUSTIC PROCESSING MEANS
   - 6: ACOUSTIC PARAMETER
   - 7: PROSODIC GENERATION MEANS
   - 8: PROSODIC PARAMETER
   - 9: SPEECH SYNTHESIS MEANS
   - 10: IMAGE STORAGE MEANS
   - 11: IMAGE
   - 12: IMAGE CONTROL MEANS
   - 13: MOVING IMAGE
   - 14: IMAGE DISPLAY MEANS
   - 21: PARAMETER TABLE STORAGE MEANS
   - 22: PARAMETER TABLE
   - 23: PARAMETER TABLE REFERENCE MEANS
   - 24: IMAGE CONTROL PARAMETER
FIG. 7
   - 1: TEXT
   - 2: LANGUAGE ANALYZING MEANS
   - 3: LANGUAGE INFORMATION
   - 5: ACOUSTIC PROCESSING MEANS
   - 6: ACOUSTIC PARAMETER
   - 7: PROSODIC GENERATION MEANS
   - 8: PROSODIC PARAMETER
   - 9: SPEECH SYNTHESIS MEANS
   - 10: IMAGE STORAGE MEANS
   - 11: IMAGE
   - 12: IMAGE CONTROL MEANS
   - 13: MOVING IMAGE
   - 14: IMAGE DISPLAY MEANS
   - 21: PARAMETER TABLE STORAGE MEANS
   - 22: PARAMETER TABLE
   - 23: PARAMETER TABLE REFERENCE MEANS
   - 24: IMAGE CONTROL PARAMETER
   - 25: MOTION SYNCHRONIZING PROBABILITY STORAGE MEANS
   - 26: MOTION SYNCHRONIZING PROBABILITY
FIG. 8
   - 1: TEXT
   - 2: LANGUAGE ANALYZING MEANS
   - 3: LANGUAGE INFORMATION
   - 5: ACOUSTIC PROCESSING MEANS
   - 6: ACOUSTIC PARAMETER
   - 7: PROSODIC GENERATION MEANS
   - 8: PROSODIC PARAMETER
   - 9: SPEECH SYNTHESIS MEANS
   - 10: IMAGE STORAGE MEANS
   - 11: IMAGE
   - 12: IMAGE CONTROL MEANS
   - 13: MOVING IMAGE
   - 14: IMAGE DISPLAY MEANS
   - 24: IMAGE CONTROL PARAMETER
   - 27: NETWORK STORAGE MEANS
   - 28: NETWORK
   - 29: NETWORK REFERENCE MEANS
FIG. 9
   - 1: TEXT
   - 2: LANGUAGE ANALYZING MEANS
   - 3: LANGUAGE INFORMATION
   - 5: ACOUSTIC PROCESSING MEANS
   - 6: ACOUSTIC PARAMETER
   - 7: PROSODIC GENERATION MEANS
   - 8: PROSODIC PARAMETER
   - 9: SPEECH SYNTHESIS MEANS
   - 10: IMAGE STORAGE MEANS
   - 11: IMAGE
   - 12: IMAGE CONTROL MEANS
   - 13: MOVING IMAGE
   - 14: IMAGE DISPLAY MEANS
   - 24: IMAGE CONTROL PARAMETER
   - 27: NETWORK STORAGE MEANS
   - 28: NETWORK
   - 29: NETWORK REFERENCE MEANS
FIG. 10
   - 27: NETWORK STORAGE MEANS
   - 28: NETWORK
   - 30: LEARNING IMAGE DATA STORAGE MEANS
   - 31: LEARNING IMAGE DATA
   - 32: ERROR CALCULATION MEANS
   - 33: ERROR DATA
   - 34: LEARNING TARGET ARC DETERMINATION MEANS
   - 35: LEANING TARGET ARC
   - 36: TRANSITION SPLIT MEANS
   - 37: AFTER-TRANSITION-SPLIT LEANING TARGET ARC
   - 38: STATE SPLIT MEANS
   - 39: AFTER-STATE-SPLIT LEARNING TARGET ARC
   - 40: OPTIMUM SPLIT DETERMINATION MEANS
   - 41: REWRITING NETWORK
FIG. 11
   - 1: TEXT
   - 41: SPEECH SYNTHESIS PORTION
   - 42: ARRAY OF PHONEMES
   - 43: TRANSFORMATION PORTION
   - 44: MOUTH SHAPE CHARACTERISTIC
   - 45: TRANSFORMATION TABLE STORING PORTION
   - 46: TRANSFORMATION TABLE
   - 47: MOUTH SHAPE PARAMETER OBTAINING PORTION
   - 48: MOUTH SHAPE PARAMETER
   - 49: TIME ADJUSTING PORTION
   - 50: PHONEME DURATION LENGTH
   - 52: IMAGE GENERATION PORTION
FIG. 12
   - a: STATE TRANSITION NUMBER
   - b: STATE NUMBER p
   - c: TRANSITION DESTINATION STATE NUMBER q
   - d: CATEGORY SET C
   - e: OUTPUT PARAMETER
FIG. 13
   - a: STATE TRANSITION NUMBER
   - b: STATE NUMBER p
   - c: TRANSITION DESTINATION STATE NUMBER q
   - d: CATEGORY SET C
   - e: OUTPUT PARAMETER
FIG. 15
   - a: STATE TRANSITION NUMBER
   - b: STATE NUMBER p
   - c: TRANSITION DESTINATION STATE NUMBER q
   - d: CATEGORY SET C
   - e: OUTPUT PARAMETER

## Claims

1. A moving image generation apparatus, comprising:
a language analyzing means for analyzing an input text to obtain language information including pronunciation of words or segments, word classes, and accent types;
an acoustic processing means for determining an acoustic parameter on the basis of the language information;
a prosodic generation means for determining a prosodic parameter for pitch, duration length, a pause and the like on the basis of the language information;
a speech synthesis means for generating synthetic speech based on the acoustic parameter and the prosodic parameter;
an image storage means for storing an facial or body image corresponding to the prosodic parameter;
an image control means for determining an output image, with reference to said image storage means, using the prosodic parameter outputted from said prosodic generation means; and
an image display means for displaying the output image.

2. A moving image generation apparatus as claimed in claim 1, characterized in that said image storage means stores a facial or body image corresponding to phonemic and prosodic parameters, and said image control means determines an output image, with reference to said image storage means, using the prosodic parameter outputted from said prosodic generation means and the phoneme of the language information outputted from said language analyzing means.

3. A moving image generation apparatus as claimed in claim 1, further comprising a context storage means for storing a context of the language information in a text on the basis of the language information outputted from said language analyzing means, characterized in that said image storage means stores a facial or body image corresponding to the context, and said image control means determines an output image, with reference to said image storage means, using the context outputted from said context storage means.

4. A moving image generation apparatus as claimed in claim 1, further comprising a context storage means for storing a context of the language information in a text on the basis of the language information outputted from said language analyzing means, characterized in that said prosodic generation means determines a prosodic parameter for pitch, duration length, a pause and the like on the basis of the language information from said context storage means.

5. A moving image generation apparatus as claimed in claim 1, further comprising: a network storage means for storing as a network a set of a state relating to a facial expression or motion of the human, a prosodic parameter serving as a control category, a transition destination state for a state transition in response to an acceptance of the control category, and a parameter indicating a manner of a facial expression or motion of the human serving as a value given in each state transition; and a network reference means for reading out a network relative to the prosodic parameter inputted from said prosodic generation means, with reference to said network storage means, to transition the state of network when the network accepts the prosodic parameter as a control category, and to output the image control parameter at the time of transition, characterized in that said image storage means stores a facial or body image corresponding to the image control parameter, and said image control means determines an output image, with reference to said image storage means, using the image control parameter from said network reference means.

6. A moving image generation apparatus comprising:
a language analyzing means for analyzing an input text to obtain language information including pronunciation of words or segments, word classes, and accent types;
an acoustic processing means for determining an acoustic parameter on the basis of the language information;
a prosodic generation means for determining a prosodic parameter for pitch, duration length, a pause and the like on the basis of the language information;
a speech synthesis means for generating synthetic speech based on the acoustic parameter and the prosodic parameter;
a learning image generation means for learning and storing in advance a correlation of the language information and a facial or body image, and for outputting an image with reference to the correlation on the basis of the language information obtained from said language analyzing means; and
an image display means for displaying the output image.

7. A moving image generation apparatus as claimed in claim 6, characterized in that said learning image generation means comprises an image table storage means for storing as a table a correlation of the language information and a facial or body image, and an image table reference means for outputting an image corresponding to the language information, with reference to said image table storage means.

8. A moving image generation apparatus as claimed in claim 6, characterized in that said learning image generation means comprises: a parameter table storage means for tabling and storing a correlation of the language information and an image control parameter indicating a manner of image indicative of a facial expression or motion of the human; a parameter table reference means for outputting an image control parameter corresponding to the language information, with reference to said parameter table storage means; an image storage means for storing a facial or body image corresponding to the image control parameter; and an image control means for determining an output image, with reference to said image storage means, using the image control parameter outputted from said parameter table reference means.

9. A moving image generation apparatus as claimed in claim 8, further comprising a motion synchronizing probability storage means for storing a table which describes a motion synchronizing probability where a plurality of motions occur in correspondence with a piece of the language information, characterized in that said parameter table reference means outputs a plurality of image control parameters, with reference to said parameter table storage means and said motion synchronizing probability storage means, on the basis of the language information outputted from said language analyzing means.

10. A moving image generation apparatus as claimed in claim 6, characterized in that said learning image generation means comprises: a network storage means for storing as a network a set of a state relating to a facial expression or motion of the human, language information serving as a control category, a transition destination state for a state transition in response to an acceptance of the control category, and a parameter indicating a manner of a facial expression or motion of the human serving as a value given in each state transition; a network reference means for reading out a network relative to the language information, with reference to said network storage means, to transition the state of network when the network accepts the language information as a control category, and to output the image control parameter at the time of transition; an image storage means for storing a facial or body image corresponding to the image control parameter; and an image control means for determining an output image, with reference to said image storage means, using the image control parameter from said network reference means.

11. An image control network learning apparatus comprising:
a learning image data storage means for storing a control parameter as learning image data, language information in a text or a prosodic parameter serving as the control category in correspondence with an image parameter for a face or body of the human who is speaking the text;
a network storage means for storing as a network a set of a state relating to a facial expression or motion of the human, language information or a prosodic parameter serving as a control category, a transition destination state for a state transition in response to an acceptance of the control category, and an image parameter indicating a manner of a facial expression or motion of the human serving as a value given in each state transition;
an error calculation means, to which the learning image data read out from said learning image data storage means is inputted, for reading out from the said network storage means the state transition from the state of the network, based on the control category of the learning image data, which is currently being maintained, the state being replaced with the transition destination state and then maintained, and for calculating an error between the image parameter contained in the state transition and the image parameter of the learning image data to be then outputted;
a learning target arc determination means for determining a state transition of a learning target on the basis of the error for each state transition, which is rendered as a learning target arc;
a transition split means for splitting a set of control category acceptable for the learning target arc, to replace the state transition correspondingly, and for calculating an error of the image parameter among the learning target arcs after the split;
a state split means for splitting a transition original state or a transition destination state of the learning target arc, to replace the state transition correspondingly, and for calculating an error of the image parameter among the learning target arcs after the split; and
an optimum split determination means for determining the error outputted from said transition split means and the error outputted from said state split means to select the state transition replaced by any one of these split means to rewrite the state transition within the network stored in said network storage means.
